# DEMANDE DE BREVET EUROPEEN

(11) **EP 2 020 351 A1**
(43) Date de publication de la demande: **04.02.2009**
(21) Numéro de dépôt: 08161450.5
(22) Date de dépôt: 30.07.2008
(51) Int. Cl.: B60S 1/40

(54) **Connecteur mécanique pour un balai d'essuie-glace pour véhicule automobile**

(30) Priorité: 31.07.2007 FR 0705593
(71) Demandeur: VALEO SYSTEMES D'ESSUYAGE, 78321 La Verrière (FR)
(72) Inventeur: Espinasse, Philippe, 27, lot des Vergers 63114 Coudes (FR); Bousset, Xavier VALEO Syst. d'essuyage Recherches ET Developpement, 63000 Clermont-Ferrand (FR); Rousseau, Jean-François, 25, rue Montagnat 63340 Charbonnier les Mines (FR)
(74) Mandataire: Rosolen-Delarue, Katell

(57) **Abrégé**

L'invention concerne une plateforme de connexion (1) destinée à porter une lame d'essuyage (2) et destinée à être fixée à un adaptateur (5) apte à être relié à un bras d'actionnement (10) pour former avec cet adaptateur (5) un connecteur mécanique pour un balai d'essuie-glace pour véhicule automobile. La plateforme (1) présente une forme générale parallélépipédique et la plateforme (1) et l'adaptateur (5) peuvent être assemblés par des moyens (7) complémentaires à glissières et rainures de guidage portés d'une part par la plateforme (1) sur ses côtés latéraux longitudinaux (9) et d'autre part par l'adaptateur (5) de sorte que l'assemblage de l'adaptateur (5) et de la plateforme (1) puisse être réalisé par un mouvement relatif parallèle coulissant en translation. Des moyens complémentaires d'arrêt (21) portés d'une part par la plateforme (1) et d'autre part par l'adaptateur (5) permettent de bloquer la position relative de la plateforme (1) et de l'adaptateur (5) à l'état assemblé.

## Description

La présente invention concerne une plateforme de connexion destinée à coopérer avec un adaptateur pour former avec celui-ci un connecteur mécanique pour un balai d'essuie-glace pour véhicule automobile, un adaptateur ainsi qu'un balai d'essuie-glace équipé d'une telle plateforme de connexion et adaptateur.

L'invention trouve une application particulièrement avantageuse, mais non exclusive, dans le domaine des systèmes d'essuie-glace de véhicules automobiles. Par rapport aux balais traditionnels majoritairement employés à l'heure actuelle, un balai d'essuie-glace plat présente la particularité d'être dépourvu de structure à palonniers. Cette nouvelle génération de balai d'essuie-glace dispose toujours d'une lame racleuse ou lame d'essuyage souple, mais l'armature externe chargée de la supporter est ici remplacée par une structure flexible qui est directement intégrée à la lame.

Par ailleurs, tout comme son homologue traditionnel de l'état de la technique, un balai d'essuie-glace plat comporte des moyens de connexion afin de pouvoir être couplé à un bras d'actionnement de forme appropriée. On rappellera à cet égard qu'il existe différentes sortes de bras d'actionnement, comme par exemple les bras crochets, les bras à axe de pivotement latéral, les bras à clipsage longitudinal, etc.

Quoi qu'il en soit, les balais d'essuie-glace plats présentent aujourd'hui l'inconvénient de ne pas être standardisés, notamment au niveau des moyens de connexion chargés d'assurer leur raccordement. Dans la pratique, il existe ainsi autant de sortes de balais d'essuie-glace plats, qu'il y a de bras-balais différents. De plus, pour une catégorie de balais d'essuie-glace plats donnée, on trouve une pluralité de modes de réalisation différents du fait de la multitude de fabricants présents sur ce marché. Cela explique pourquoi au final, il existe un si grand nombre de balais d'essuie-glace plats intégrant des moyens de connexions spécifiques à un type donné de bras d'actionnement.

Cette offre pléthorique est certes stimulante en termes d'innovations pour les fabricants désireux de se démarquer de leurs concurrents, mais en contrepartie, la multiplication des références au stade de la production et/ou de la distribution représente un coût significatif. Faute de standardisation, le prix des balais d'essuie-glace plats reste par conséquent beaucoup trop élevé.

On connaît du document W02006/069648 une plateforme de connexion et des adaptateurs appropriés pour divers type de bras d'actionnement pour attacher une lame d'essuyage plat.

Dans ce document, la plateforme de connexion comporte d'une part une butée pour recevoir une extrémité d'un adaptateur et d'autre part un bras élastique de verrouillage de l'autre extrémité de l'adaptateur.

La présente invention vise à proposer une alternative à ce type de plateforme de connexion qui soit plus économique.

A cet effet, l'invention a pour objet une plateforme de connexion destinée à porter une lame d'essuyage et destinée à être fixée à un adaptateur apte à être relié à un bras d'actionnement pour former avec cet adaptateur un connecteur mécanique pour un balai d'essuie-glace pour véhicule automobile, caractérisée en ce que la plateforme présente une forme générale parallélépipédique et en ce que la plateforme et l'adaptateur peuvent être assemblés par des moyens complémentaires à glissières et rainures de guidage portés d'une part par la plateforme sur ses côtés latéraux longitudinaux et d'autre part par l'adaptateur de sorte que l'assemblage de l'adaptateur et de la plateforme puisse être réalisé par un mouvement relatif parallèle coulissant en translation et en ce que des moyens d'arrêt complémentaires portés d'une part par la plateforme et d'autre part par l'adaptateur permettent de bloquer la position relative de la plateforme et de l'adaptateur à l'état assemblé.

L'invention a également pour objet un adaptateur pour balai d'essuie-glace apte à être relié à un bras d'actionnement et destiné à être fixé à une plateforme de connexion destinée à porter une lame d'essuyage pour former avec cette plateforme un connecteur mécanique pour un balai d'essuie-glace pour véhicule automobile, caractérisé en ce que l'adaptateur comprend une embase présentant une forme générale parallélépipédique et en ce que la plateforme et l'adaptateur peuvent être assemblés par des moyens complémentaires à glissières et rainures de guidage portés d'une part par la plateforme sur ses côtés latéraux longitudinaux et d'autre part par l'embase de l'adaptateur de sorte que l'assemblage de l'adaptateur et de la plateforme puisse être réalisé par un mouvement relatif parallèle coulissant en translation et en ce que des moyens d'arrêt complémentaires portés d'une part par la plateforme et d'autre part par l'adaptateur permettent de bloquer la position relative de la plateforme et de l'adaptateur à l'état assemblé.

Enfin, l'invention a pour objet un balai d'essuie-glace plat comprenant une lame d'essuyage et des vertèbres de maintien de la lame, caractérisé en ce qu'il comprend en outre une plateforme de connexion tel que défini ci-dessus et un adaptateur tel que défini ci-dessus.

D'autres avantages et caractéristiques apparaîtront à la lecture de la description de l'invention, ainsi que des dessins annexés sur lesquels :
- la figure 1 montre une vue en perspective d'un bras d'actionnement ainsi qu'une plateforme de connexion portant une lame d'essuyage et un adaptateur conforme selon l'invention,
- la figure 2 est une vue en perspective agrandie de la plateforme et de l'adaptateur selon l'invention,
- la figure 3 est une vue en perspective de la plateforme et de l'adaptateur de la figure 2 sous un angle de vue différent,
- la figure 4 est un schéma simplifié d'une plateforme selon un autre mode de réalisation selon l'invention,
- les figures 5, 6 et 7 sont des vues schématiques en coupe selon la ligne V-V de la figure 4 pour montrer le fonctionnement du mode de réalisation de la figure 4.

Sur toutes les figures, les éléments identiques portent les mêmes numéros de référence.

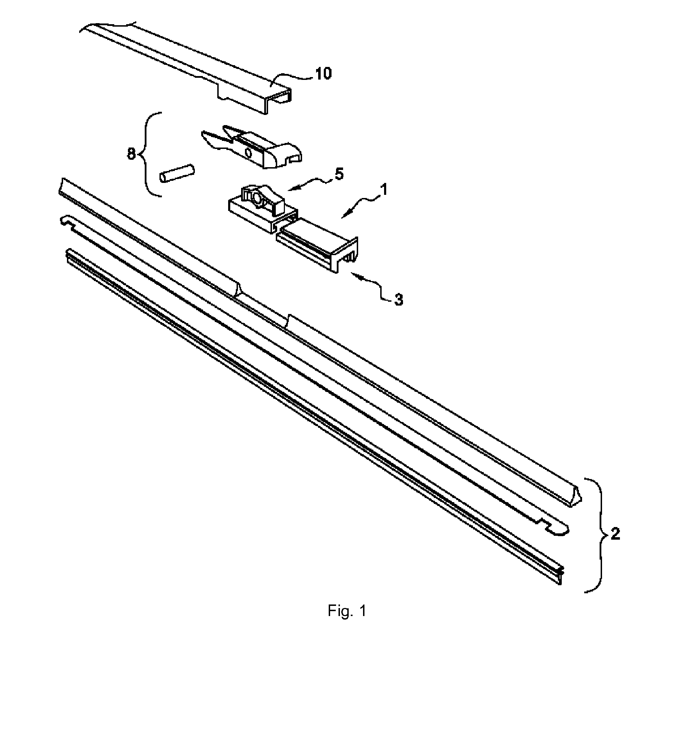

En référence aux figures 1 à 3, on décrira d'abord un premier mode de réalisation de l'invention.

Sur la figure 1 sont représentés d'une part une plateforme de connexion 1 de forme générale parallélépipédique et destiné à porter une lame d'essuyage 2 dans un canal de maintien 3 traversant longitudinalement cette plateforme 1. Cette plateforme 1 s'adapte plus particulièrement à un balai d'essuie-glace plat comme celui connu du document W02006/069648.

Cette plateforme 1 est destiné à être fixé à un adaptateur 5 présentant également une forme générale parallélépipédique et apte à être relié, directement ou par l'intermédiaire d'une pièce supplémentaire 8, à un bras d'actionnement 10 pour former avec cet adaptateur un connecteur mécanique pour un balai d'essuie-glace pour véhicule automobile.

Pour chaque type d'attache d'un bras d'actionnement, comme par exemple des bras crochets, des bras à axe de pivotement latéral, des bras à clipsage / encliquetage longitudinal, etc. on peut prévoir un adaptateur 5 spécifique, mais chacun de ces adaptateurs 5 s'adapte à la même plateforme 1 de connexion par une interface standard. Dans le présent exemple, l'adaptateur est réalisé pour être connecté à un bras d'actionnement à encliquetage longitudinal.

A l'état assemblé, la lame d'essuie-glace, la plateforme de connexion 1, l'adaptateur 5 et le bras d'actionnement 10 d'un mécanisme motorisé d'essuyage font partie d'un dispositif d'essuyage des vitres (par exemple pare-brise ou lunette arrière) d'un véhicule automobile.

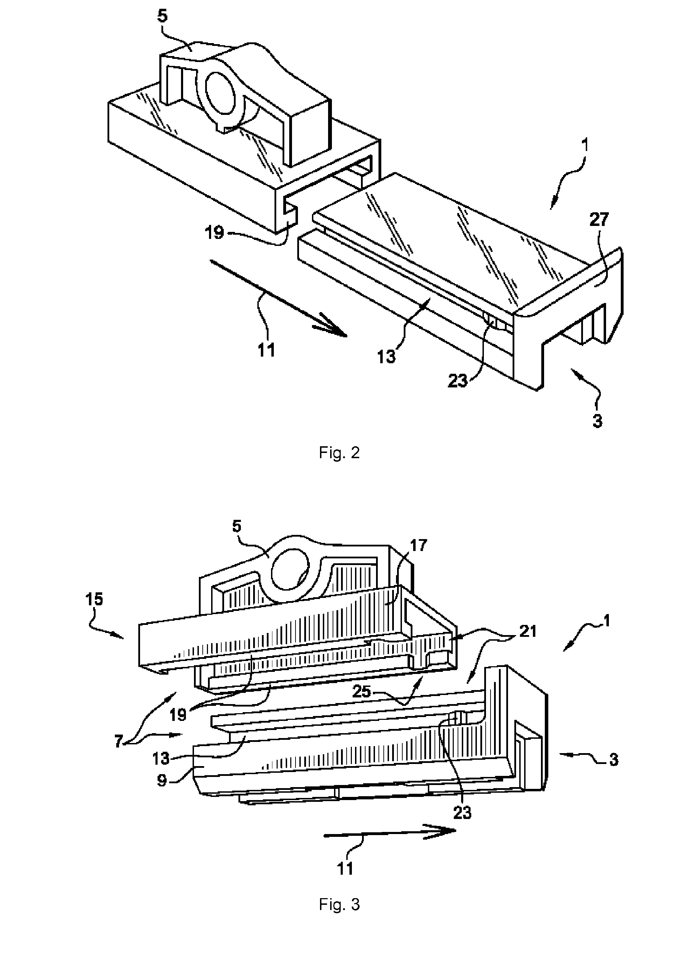

Comme on le voit mieux sur la figure 2, l'adaptateur 5 se fixe sur la face de la plateforme opposée à celle présentant le canal 3 de maintien de la lame d'essuyage.

La plateforme 1 et l'adaptateur 5 peuvent être assemblés par des moyens 7 complémentaires à glissières et rainures de guidage portés d'une part par la plateforme 1 sur ses côtés latéraux longitudinaux 9 et d'autre part par l'adaptateur 5 de sorte que l'assemblage de l'adaptateur 5 et de la plateforme 1 puisse être réalisé par un mouvement relatif parallèle coulissant en translation (voir flèche 11).

Plus spécifiquement, la plateforme 1 comporte sur chaque côté latéral 9 une rainure 13 appartenant aux moyens 7 complémentaires à glissières et rainures. L'embase 15 de l'adaptateur comporte sur chaque côté une paroi latérale 17 portant une nervure longitudinale 19 qui est orientée perpendiculairement à la paroi 17. Les deux nervures 19 sont opposées lune à l'autre et appartiennent également aux moyens 7 complémentaires à glissières et rainures.

De plus, on prévoit des moyens 21 complémentaires d'arrêt portés d'une part par la plateforme 1 et d'autre part par l'adaptateur 5 permettant de bloquer la position relative de la plateforme 1 et de l'adaptateur 5 à l'état assemblé.

Ces moyens d'arrêt 21 comportent au moins une protubérance 23 portée par la plateforme 1 et au moins un décrochement 25 associé de forme sensiblement complémentaire porté par l'adaptateur 5.

De préférence, la plateforme 1 présente une telle protubérance 23 dans chaque rainure 19 et l'adaptateur présente un décrochement 25 correspondant associé sur chaque nervure 19.

En outre, la plateforme 1 comprend des moyens de butée 27, par exemple formée par une paroi frontale de la plateforme 1, pour limiter la course du mouvement relatif entre la plateforme 1 et l'adaptateur 5 lors de l'assemblage.

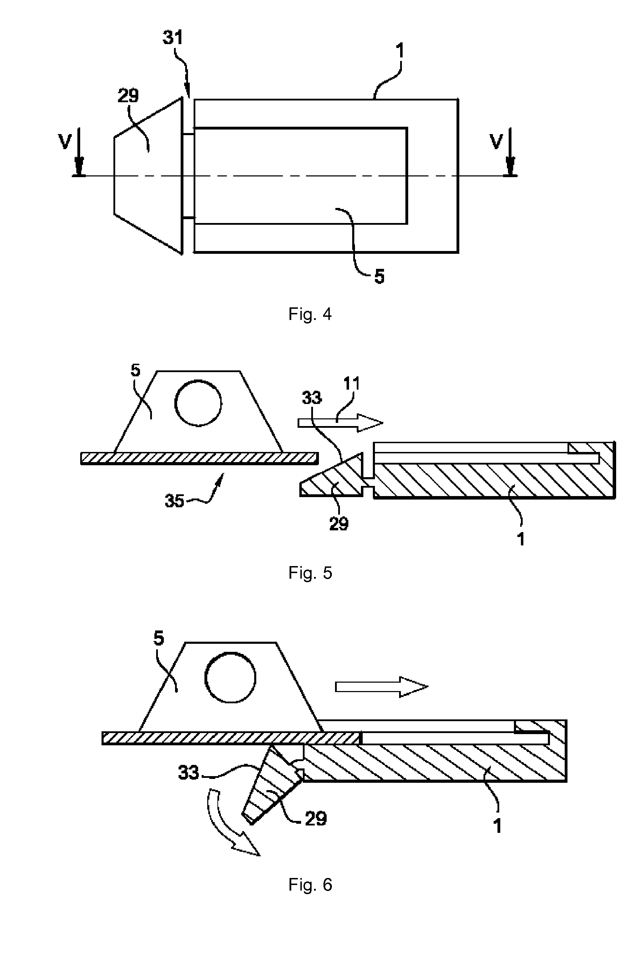

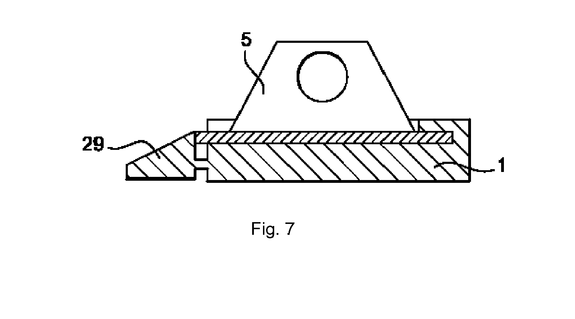

Les figures 4 à 7 montrent un autre mode de réalisation de l'invention. Ce mode de réalisation se différencie de celui des figures 1 à 3 par le fait que la plateforme 1 comprend de plus un crochet élastique de verrouillage 29 agencé au niveau de la face frontale d'insertion 31 de la plateforme 1 de manière à s'effacer (voir figure 6) lors de l'assemblage par insertion de l'adaptateur 5 avec la plateforme 1. Puis, le crochet 29 se relève et verrouille la position relative entre l'adaptateur 5 et la plateforme 1 (voir figure 7) lorsque l'adaptateur 5 est en contact avec les moyens de butée.

Avantageusement, le crochet élastique de verrouillage 29 présente une rampe 33 destinée à coopérer avec la face 35 de l'adaptateur 5 opposée à celle destinée à être fixée au bras d'actionnement 10 lors de l'insertion de l'adaptateur 5.

On comprend que la plateforme de connexion selon l'invention présente une interface de connexion fiable avec des adaptateurs, permettant une reprise de force améliorée lors du balayage.

De plus, elle s'adapte directement ou par l'intermédiaire de pièces de forme 8 aux divers types de bras d'actionnement 10, divers bras à clipsage / encliquetage longitudinale, des bras à crochet et des bras à axe de pivotement latéral.

Ainsi, les lames d'essuyage avec les plateformes de connexion 1 peuvent être fabriquées comme des pièces standardisées qui s'emploient avec tous les types de bras d'actionnement.

## Revendications

1. Plateforme de connexion (1) destinée à porter une lame d'essuyage (2) et destinée à être fixée à un adaptateur (5) apte à être relié à un bras d'actionnement (10) pour former avec cet adaptateur (5) un connecteur mécanique pour un balai d'essuie-glace pour véhicule automobile, **caractérisée en ce que** la plateforme (1) présente une forme générale parallélépipédique et **en ce que** la plateforme (1) et l'adaptateur (5) peuvent être assemblés par des moyens (7) complémentaires à glissières et rainures de guidage portés d'une part par la plateforme (1) sur ses côtés latéraux longitudinaux (9) et d'autre part par l'adaptateur (5) de sorte que l'assemblage de l'adaptateur (5) et de la plateforme (1) puisse être réalisé par un mouvement relatif parallèle coulissant en translation et **en ce que** des moyens complémentaires d'arrêt (21) portés d'une part par la plateforme (1) et d'autre part par l'adaptateur (5) permettent de bloquer la position relative de la plateforme (1) et de l'adaptateur (5) à l'état assemblé.

2. Plateforme selon la revendication 1, **caractérisée en ce qu'**elle comporte sur chaque côté latéral (9) une rainure (13) appartenant aux moyens (7) complémentaires à glissières et rainures.

3. Plateforme selon la revendication 1 ou 2, **caractérisée en ce que** les moyens d'arrêt (21) comportent au moins une protubérance (23) portée par la plateforme (1) et au moins un décrochement (25) associé de forme sensiblement complémentaire porté par l'adaptateur (5).

4. Plateforme selon la revendication 3, **caractérisée en ce qu'**elle présente dans chaque rainure (13) une protubérance (23).

5. Plateforme selon l'une quelconque des revendications 1 à 4, **caractérisé en ce qu'**elle comprend des moyens de butée (27) pour limiter le mouvement relatif entre la plateforme et l'adaptateur lors de l'assemblage.

6. Plateforme selon la revendication 5, **caractérisée en ce que** les moyens de butée (27) sont formés par une paroi frontale de la plateforme.

7. Plateforme selon la revendication 5 ou 6, **caractérisée en ce qu'**elle comprend en outre un crochet élastique de verrouillage (29) agencé au niveau de la face frontale d'insertion (31) de la plateforme de manière à s'effacer lors de l'assemblage par insertion de l'adaptateur (5) et de la plateforme (1) et en verrouillant la position relative entre l'adaptateur (5) et la plateforme (1) lorsque l'adaptateur est en contact avec les moyens de butée (27).

8. Plateforme selon la revendication 7, **caractérisée en ce que** le crochet élastique de verrouillage (29) présente une rampe (33) destinée à coopérer avec la face (35) de l'adaptateur (5) opposée à celle destinée à être fixée au bras d'actionnement (10) lors de l'insertion de l'adaptateur (5).

9. Adaptateur (5) pour balai d'essuie-glace apte à être relié à un bras d'actionnement (10) et destiné à être fixé à une plateforme (1) de connexion destinée à porter une lame d'essuyage (2) pour former avec cette plateforme (1) un connecteur mécanique pour un balai d'essuie-glace pour véhicule automobile, **caractérisé en ce que** l'adaptateur (5) comprend une embase (15) présentant une forme générale parallélépipédique et **en ce que** la plateforme (1) et l'adaptateur (5) peuvent être assemblés par des moyens (7) complémentaires à glissières et rainures de guidage portés d'une part par la plateforme (1) sur ses côtés latéraux longitudinaux (9) et d'autre part par l'embase (15) de l'adaptateur de sorte que l'assemblage de l'adaptateur (5) et de la plateforme (1) puisse être réalisé par un mouvement relatif parallèle coulissant en translation et **en ce que** des moyens d'arrêt (21) complémentaires portés d'une part par la plateforme (1) et d'autre part par l'adaptateur (5) permettent de bloquer la position relative de la plateforme (5) et de l'adaptateur (1) à l'état assemblé.

10. Adaptateur selon la revendication 9, **caractérisé en ce que** l'embase (15) comporte sur chaque côté une paroi latérale (17) portant une nervure longitudinale (19) qui est orientée perpendiculairement à la paroi (17), les deux nervures (19) étant opposées et appartenant aux moyens (7) complémentaires à glissières et rainures.

11. Adaptateur selon la revendication 9 ou 10, **caractérisé en ce que** les moyens d'arrêt (21) comportent au moins une protubérance (23) portée par la plateforme (1) et au moins un décrochement (25) associé de forme sensiblement complémentaire porté par l'adaptateur (5).

12. Adaptateur selon la revendication 11, **caractérisée en ce qu'**il présente sur chaque nervure (19) un décrochement (25).

13. Balai d'essuie-glace plat comprenant une lame d'essuyage et des vertèbres de maintien de la lame, **caractérisé en ce qu'**il comprend en outre une plateforme de connexion selon l'une quelconque des revendications 1 à 8 et un adaptateur selon l'une quelconque des revendications 9 à 12.
